# FASCICULE DE BREVET EUROPEEN

(11) **EP 3 519 263 B1**
(45) Date de publication et mention de la délivrance du brevet: **16.09.2020**
(21) Numéro de dépôt: 17752348.7
(22) Date de dépôt: 07.08.2017
(51) Int. Cl.: B60S 1/52, B60S 1/56, G02B 27/00

(54) **DISPOSITIF DE NETTOYAGE D'UN CAPTEUR OPTIQUE D'UN SYSTÈME DE DÉTECTION OPTIQUE POUR VÉHICULE AUTOMOBILE**
VORRICHTUNG ZUR REINIGUNG EINES OPTISCHEN SENSORS EINES OPTISCHEN DETEKTIONSSYSTEMS FÜR EIN KRAFTFAHRZEUG
DEVICE FOR CLEANING AN OPTICAL SENSOR OF AN OPTICAL DETECTION SYSTEM FOR A MOTOR VEHICLE

(30) Priorité: 28.09.2016 FR 1659177
(43) Date de publication de la demande: 07.08.2019
(73) Titulaire: Valeo Systèmes d'Essuyage, 78322 Le Mesnil Saint Denis (FR)
(72) Inventeur: TREBOUET, Marcel, 78322 Le Mesnil Saint Denis (FR); GIRAUD, Frédéric, 78322 Le Mesnil Saint Denis (FR)
(74) Mandataire: Valeo Vision
(86) Numéro de dépôt international: PCT/EP2017/069963
(87) Numéro de publication internationale: WO 2018/059807

(56) Documents cités:
- EP-A1- 3 121 070
- FR-A1- 2 675 758
- FR-A1- 3 021 014
- US-A1- 2015 138 357

## Description

La présente invention se rapporte au domaine des dispositifs d'aide à la conduite et des systèmes de détection optique utilisés à cette fin, et elle concerne plus particulièrement les dispositifs de nettoyage destinés à projeter au moins un fluide vers une surface à nettoyer d'un véhicule automobile, tel qu'un capteur optique d'un système de détection optique pour véhicule.

On appelle système de détection optique tout système comportant des capteurs optiques tels que des caméras, des capteurs laser ou autres capteurs basés sur l'émission et/ou la détection de la lumière dans le spectre visible ou invisible pour l'Homme, en particulier l'infrarouge.

De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le système de détection optique doivent être de la meilleure qualité possible, et il est donc indispensable de disposer de capteurs propres pour réaliser ces acquisitions de données. Pour ce faire, un dispositif de nettoyage peut être commandé pour injecter, sur un capteur du système de détection optique (par exemple la lentille d'une caméra de prise de vues), un fluide nettoyant juste avant que soit réalisée la détection (par exemple la prise de vue).

Ces dispositifs de nettoyage ne doivent pas gêner le fonctionnement du capteur optique, c'est-à-dire qu'ils ne doivent notamment pas se trouver dans le champ de vision du capteur, et ils doivent être par ailleurs le plus compact possible pour répondre aux contraintes d'encombrement du véhicule. Pour cela, le plus souvent, les dispositifs de nettoyage comportent une partie mobile entre une position de nettoyage, déployée, dans laquelle des orifices de distribution que la partie mobile comporte se trouvent au voisinage de la surface du capteur à nettoyer, et une position de repos, dans laquelle cette partie mobile est rétractée pour ne pas gêner la détection optique au moyen du capteur considéré.

La partie mobile forme un piston logé dans un cylindre de vérin. Il est connu d'utiliser la pression du fluide de nettoyage admis dans le cylindre pour entraîner le déplacement du piston vers sa position de nettoyage, le fluide de nettoyage étant par ailleurs destiné à pénétrer dans un conduit interne de la partie mobile, au moins lorsque celle-ci est dans la position de nettoyage, pour être ensuite injecté via les orifices de distribution.

Le fluide de nettoyage pénètre dans une chambre d'admission ménagée dans le corps via un orifice d'admission réalisé dans un embout fermant le cylindre, et le fluide présent dans la chambre pousse sur une extrémité du piston mobile dans le corps. Le piston coulisse alors le long d'une tige solidaire de langue.

Il est connu de ménager à l'extrémité libre de la tige fixe, solidaire de l'embout fermant le cylindre et le long duquel coulisse le piston, des rainures pour permettre le passage de fluide de nettoyage lorsque le piston mobile est dans une position telle par rapport à la tige qu'une extrémité de ces rainures n'est plus recouverte par le piston mobile. Dans une telle position, une première extrémité amont de la rainure est en communication fluidique avec la chambre d'admission.

On comprend que jusqu'à une position déterminée relative du piston par rapport à la tige, le coulissement se fait de manière étanche, c'est-à-dire que la position du piston recouvre intégralement les rainures formées dans l'épaisseur de la tige. Le fluide présent dans la chambre ne peut pénétrer dans les rainures du fait de la position du piston mobile et d'un élément d'étanchéité associé et le cheminement du fluide vers les orifices de distribution est ainsi bloqué.

Au-delà d'une position définie, les rainures ne sont plus recouvertes par le piston au niveau de leur première extrémité amont, et cela autorise le passage du fluide dans les rainures, entre la tige et le piston, et donc le passage du fluide depuis la chambre d'admission vers l'intérieur de la partie mobile, et jusqu'aux orifices de distribution, via les rainures.

À titre d'exemple, les documents FR2675758 et FR3021014 divulguent de tels dispositifs de nettoyage dans lesquels la tige fixe, solidaire d'un embout fixé sur le cylindre, comporte périphériquement une pluralité de rainures formant chacune passage pour le liquide de nettoyage. Comme expliqué précédemment, l'éjection du fluide ne peut se faire que lorsque la partie mobile atteint une position déterminée par rapport à la tige et donc lorsque les orifices de distribution agencés en bout de cette partie mobile atteint une position déterminée en regard du capteur optique. A ce stade, le fluide de nettoyage arrive massivement dans le conduit interne, les extrémités des rainures étant dégagées simultanément.

La réalisation de ces passages sous forme de rainures réalisées dans l'épaisseur de la tige solidaire de l'embout de fermeture du corps creux est rendue difficile par la petite taille des pièces à réaliser pour obtenir un dispositif de nettoyage applicable sur un véhicule automobile pour nettoyer des capteurs optiques de système de détection optique. Il en résulte des opérations de fabrication difficiles à mettre en œuvre pour s'assurer du bon dimensionnement des rainures. Or, la précision de fabrication de la dimension radiale, c'est-à-dire la profondeur, des rainures, est déterminante pour quantifier le liquide qui passe de la chambre d'admission à l'intérieur du piston, et la précision de fabrication de la dimension axiale, c'est-à-dire la longueur, des rainures dans la direction de coulissement du piston mobile, est déterminante pour piloter le moment où le liquide est projeté sur le capteur optique en fonction du déploiement des buses de projection.

En outre, il convient de noter que la dimension et/ou l'agencement des rainures réalisées dans la tige peut varier d'un dispositif à l'autre, afin de s'adapter aux dimensions du système optique à nettoyer notamment. La course du piston mobile peut varier ainsi que le moment du déclenchement de la projection de fluide de nettoyage. On comprend que cela implique pour chaque dispositif distinct fabriqué selon l'enseignement des documents FR2675758 et FR3021014 de développer et fabriquer une tige et un embout spécifique, dans les conditions de fabrication spécifique évoquées ci-dessus, à savoir les petites dimensions de ces pièces.

Il convient de noter que, dans le mode de réalisation divulgué par le document FR3021014, l'élément d'étanchéité permettant de bloquer temporairement le fluide de nettoyage dans la chambre d'admission consiste en des lèvres d'un joint permettant en outre le coulissement étanche du piston mobile dans le corps creux du dispositif, ce qui assure l'étanchéité de la chambre d'admission. Un inconvénient de ce mode de réalisation est qu'un même élément d'étanchéité associé au piston mobile présente deux zones opérationnelles d'étanchéité pour participer simultanément à deux actions d'étanchéité, à savoir une première pour le coulissement étanche du piston dans le corps creux et une deuxième pour le coulissement étanche du piston autour de la tige. La dégradation éventuelle de l'élément d'étanchéité au niveau d'une de ses zones opérationnelles d'étanchéité implique le changement de l'ensemble du joint.

La présente invention a pour but de proposer un dispositif de nettoyage, destiné à projeter au moins un fluide vers une surface à nettoyer d'un véhicule automobile, tel qu'un capteur optique d'un système de détection optique qui apporte une réponse aux inconvénients précédemment cités, et qui permette la distribution efficace de liquide de nettoyage.

L'invention a pour objet un dispositif de nettoyage destiné à projeter au moins un fluide vers une surface à nettoyer d'un véhicule automobile, tel qu'un capteur optique d'un système de détection optique pour véhicule, comprenant :
- un corps creux fermé à une extrémité par une bride d'entrée,
- un piston mobile en coulissement le long d'un axe longitudinal dans le corps creux et porteur à une première extrémité d'un élément de distribution de fluide de nettoyage, le piston étant mobile entre une position extrême rétractée et une position extrême déployée,
- une tige solidaire de la bride d'entrée qui s'étend parallèlement à l'axe longitudinal et le long de laquelle coulisse le piston mobile,
- des moyens d'acheminement de fluide de nettoyage à travers le corps creux, depuis un embout d'admission de fluide jusqu'à l'élément de distribution, comprenant au moins une chambre d'admission dont le volume varie en fonction du déplacement du piston mobile et un conduit de distribution ménagé dans le piston mobile,
- le piston et la tige sont configurés pour prévoir entre eux au moins un canal de passage de fluide de nettoyage.

Le dispositif de nettoyage selon l'invention est caractérisé en ce que le au moins un canal de passage est formé par une rainure ménagée dans le piston mobile. Ce qui résulte que la rainure est recouverte par la tige, totalement ou partiellement selon la position relative du piston par rapport à la tige.

Selon l'invention, les « moyens d'acheminement » du fluide de nettoyage regroupent l'ensemble des conduits, chambres d'admission et/ou canaux de passage qui permettent d'amener le fluide de nettoyage depuis l'entrée ou zone d'admission jusqu'à l'élément de distribution. Ces moyens d'acheminement contiennent au moins un conduit de distribution ménagé dans le piston mobile, lequel est constitué, de préférence, de deux portions de diamètres différents. La partie supérieure élargie du conduit de distribution est définie de manière à permettre le coulissement de la tige dans le piston mobile tandis que la partie inférieure dudit conduit permet, par son diamètre moindre, de mettre sous pression le fluide de manière à éjecter celui-ci sur le capteur optique en vue de son nettoyage.

Selon l'invention, « les moyens de déplacement » du piston sont formés au moins en partie par les moyens d'acheminement du fluide, en particulier par la pression dudit fluide de nettoyage exercée sur ledit piston.

Selon différentes caractéristiques de l'invention, prises seules ou en combinaison, on peut prévoir que :
- la rainure du au moins un canal de passage est agencée parallèlement à l'axe longitudinal ;
- le piston mobile et la tige sont configurés de sorte que chaque rainure ménagée dans le piston mobile est recouverte, intégralement dans la position extrême rétractée et partiellement dans les autres positions relatives du piston et de la tige, par la tige ;
- la rainure du au moins un canal est ménagée sur la paroi interne du piston délimitant le conduit de distribution ;
- la rainure du au moins un canal de passage est ménagée dans le piston de manière à déboucher sur la chambre d'admission.

Dans un mode de réalisation préféré du dispositif de nettoyage, celui-ci comporte un embout d'admission de fluide formé en saillie de la bride d'entrée et excentré par rapport à l'axe longitudinal sur lequel est centré le corps creux. L'embout d'admission de fluide débouche à l'intérieur du corps creux dans une chambre d'admission délimitée au moins en partie par la bride d'entrée, une paroi périphérique du corps creux et par le piston mobile.

Avantageusement, les moyens de déplacement du piston comprennent, outre les moyens d'acheminement du fluide aptes à mettre sous pression ledit fluide de nettoyage, des moyens élastiques de rappel en position, logés dans le corps creux pour tendre à rappeler en position de repos ledit piston mobile. De préférence, les moyens élastiques de rappel en position sont logés dans le corps creux pour porter contre le piston mobile, à l'opposé de la chambre d'admission.
Dans un mode de réalisation, les moyens élastiques de rappel en position sont constitués d'au moins un ressort de compression apte à se déformer sous l'effet de la pression du fluide de nettoyage de manière à favoriser le déplacement longitudinal du piston mobile. On comprend ainsi qu'en phase de chargement du fluide dans le dispositif, le piston mobile se déplace à l'opposé de la chambre d'admission puis effectue un trajet inverse de rappel à l'issue de la phase de nettoyage par éjection du fluide.
Selon une série de caractéristiques, on peut prévoir que :
- le piston mobile comporte une partie centrale sensiblement cylindrique,
   apte à coulisser au sein d'un manchon de guidage creux ménagé à l'extrémité du corps creux opposé à la bride d'entrée, une partie terminale de distribution prolongeant la partie centrale et à l'extrémité libre de laquelle l'élément de distribution est apte à être fixé, et une partie d'admission prolongeant la partie centrale à l'opposé de la partie terminale de distribution et configurée pour coulisser à l'intérieur dudit corps creux ;
- la rainure du au moins un canal de passage est réalisée dans le piston le long de la partie d'admission ;
- la partie terminale de distribution du piston est agencée pour que le conduit de distribution ménagé dans le piston puisse communiquer avec un canal de distribution de l'élément de distribution ;
- le piston comporte, au voisinage de son extrémité amont, une couronne, contre une face de laquelle peut prend appui le moyen élastique de rappel ; de préférence, ladite couronne comporte une gorge périphérique agencée dans sa paroi extérieure et apte à accueillir un élément d'étanchéité, de telle manière que le piston équipé dudit élément, puisse coulisser de manière étanche au sein du corps creux ;
- une gorge périphérique peut être agencée à une extrémité libre de la tige, pour accueillir un joint d'étanchéité, de telle manière que la tige, équipée dudit joint, puisse coulisser de manière étanche dans la partie centrale du piston.

Le dispositif de nettoyage selon l'invention peut comprendre une pluralité de canaux de passage disposés entre la tige et le piston mobile, avec au moins une des rainures ménagées dans le piston mobile qui présente une dimension axiale distincte de celle des rainures voisines ; alternativement ou simultanément, au moins deux rainures ménagées dans le piston mobile peuvent présenter des dimensions radiales variables.

Par l'expression « dimension axiale », on entend la hauteur d'un canal de passage, dans la direction de l'axe longitudinal (X) d'allongement du piston mobile tandis que par « dimension radiale », on entend parler de profondeur dudit canal, dans l'épaisseur de la partie du piston mobile et/ou de la tige dans laquelle les canaux de passage peuvent être ménagés.

Les agencements et dimensionnements particuliers des rainures formant les canaux de passage permettent de faire varier le débit de fluide en présentant des sections de passage plus ou moins grandes. Notamment, le fait de modifier la dimension radiale d'un canal peut jouer sur la quantité de fluide de nettoyage passant de la chambre d'admission à l'élément de distribution, et le fait de proposer une dimension axiale différente d'un canal à l'autre permet de piloter le débit de passage de fluide, et donc le fluide projeté sur l'élément vitré à nettoyer, au fur et à mesure du déploiement du piston mobile qui influe sur la position des buses de projection par rapport à cet élément vitré. Quelles que soient les géométries et dimensions radiales des canaux de passage, il est nécessaire de maintenir une portée suffisante entre deux canaux consécutifs afin de permettre un guidage optimal du piston autour de la tige.

Selon une autre caractéristique de l'invention et dans le but de s'inscrire dans un schéma hydraulique global, le dispositif de nettoyage d'un capteur peut comprendre, outre l'embout d'admission, le corps creux, la tige et le piston mobile porteur des canaux de passage, un réservoir de stockage du fluide de nettoyage, et des éléments de pilotage de la circulation de fluide de nettoyage entre le réservoir et l'embout d'admission. Lesdits éléments de pilotage peuvent être constitués d'une pompe et optionnellement d'une vanne solénoïde et sont configurés pour bloquer l'admission de fluide de nettoyage dans l'embout d'admission dans une position de repos, pour alimenter l'embout d'admission en fluide de nettoyage afin de déplacer l'élément de distribution dans une position de nettoyage d'une part et projeter du fluide de nettoyage d'autre part, et pour bloquer le fluide de nettoyage dans la chambre d'admission et le canal de distribution et maintenir l'élément de distribution dans la position de nettoyage.

Lorsqu'elle est intégrée dans le système hydraulique, la vanne solénoïde est une électrovanne 3 voies apte à permettre ou stopper le passage d'un fluide sous pression suivant trois positions différentes afin de permettre la circulation depuis la pompe jusqu'au vérin, ou empêcher toute circulation ou encore permettre le retour de liquide depuis le vérin jusqu'au réservoir.

Un second objet de l'invention concerne un véhicule automobile équipé d'un ensemble de détection optique caractérisé en ce qu'il comporte au moins un dispositif de nettoyage tel que précédemment décrit, destiné à projeter au moins un fluide vers une surface du capteur optique à nettoyer.

D'autres caractéristiques, détails et avantages de l'invention et de son fonctionnement ressortiront plus clairement à la lecture de la description donnée ci-après à titre indicatif, en relation avec les figures annexées, dans lesquelles :

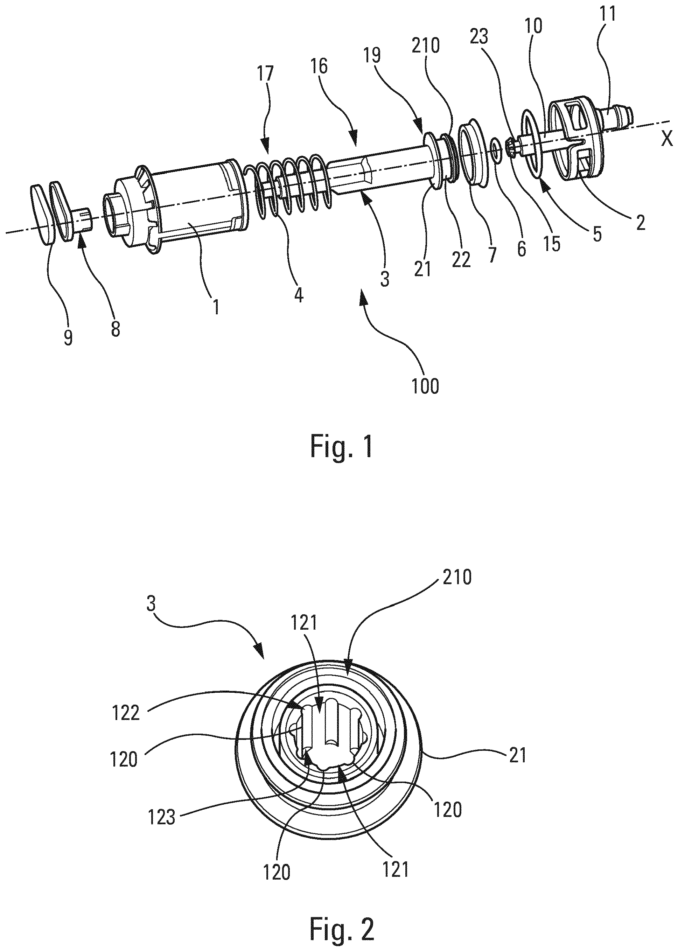

- la figure 1 est une vue en perspective éclatée d'un dispositif de nettoyage selon l'invention, destiné à projeter au moins un fluide vers une surface à nettoyer d'un véhicule automobile, tel qu'un capteur optique d'un système de détection optique, le dispositif de nettoyage comportant au moins un piston mobile en coulissement dans un corps creux le long d'une tige fixe et portant à une extrémité un élément de distribution du fluide ;
- la figure 2 est une vue en coupe du piston du dispositif de l'invention, suivant un plan perpendiculaire à l'axe longitudinal (X) de la figure 1, au niveau d'une partie d'extrémité à l'opposé de l'extrémité portant l'élément de distribution de fluide, rendant visible les rainures ménagées circonférentiellement sur une paroi intérieure du piston mobile pour le passage de fluide de nettoyage ;

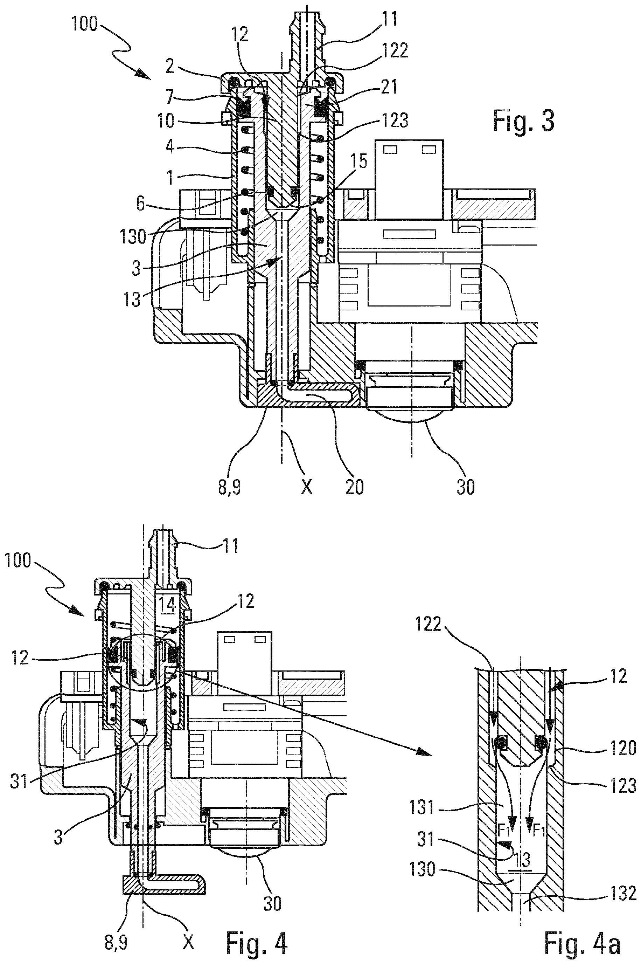

- la figure 3 est une vue en coupe, dans un plan de coupe comprenant l'axe longitudinal (X), du dispositif de nettoyage de la figure 1 lorsque le piston mobile est en position extrême rétractée, ou position de repos ;
- la figure 4 est une vue en coupe, dans le même plan de coupe que celui de la figure 3, du dispositif de nettoyage de la figure 1, dans une position intermédiaire dans laquelle le fluide de nettoyage est autorisé à passer à l'intérieur du piston mobile par le biais de canaux de passage, et la figure 4a est une vue de détail de l'extrémité libre de la tige autour duquel coulisse le piston dans cette première position intermédiaire ;

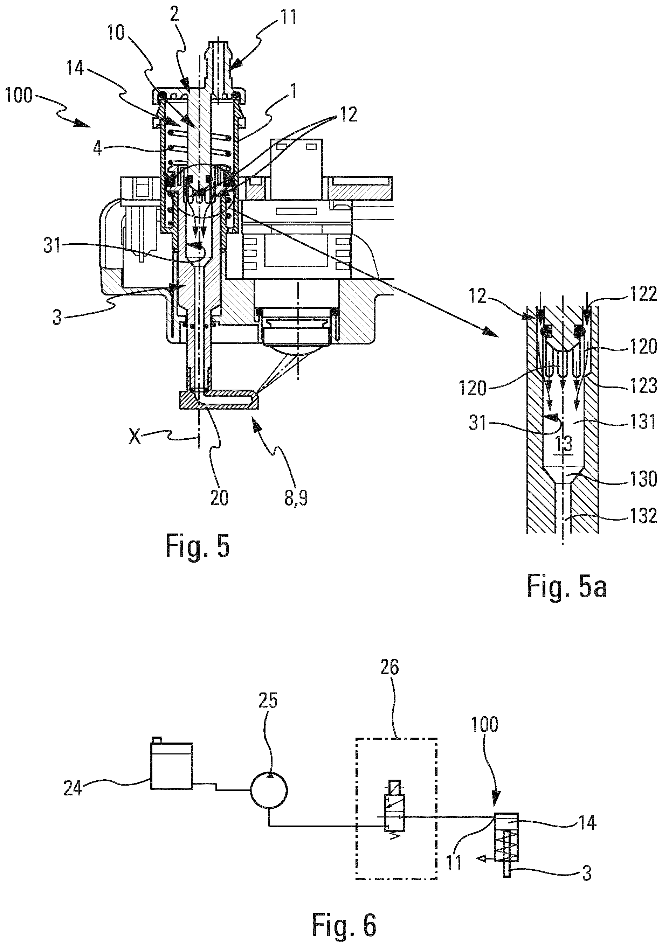

- la figure 5 est une vue en coupe, dans le même plan de coupe que celui de la figure 3, du dispositif de nettoyage de la figure 1, lorsque le piston mobile est en position extrême déployée, et la figure 5a est une vue de détail de l'extrémité libre de la tige autour duquel coulisse le piston dans cette position extrême déployée ; et
- la figure 6 est une représentation schématique de l'architecture hydraulique associée au dispositif de nettoyage selon l'invention.

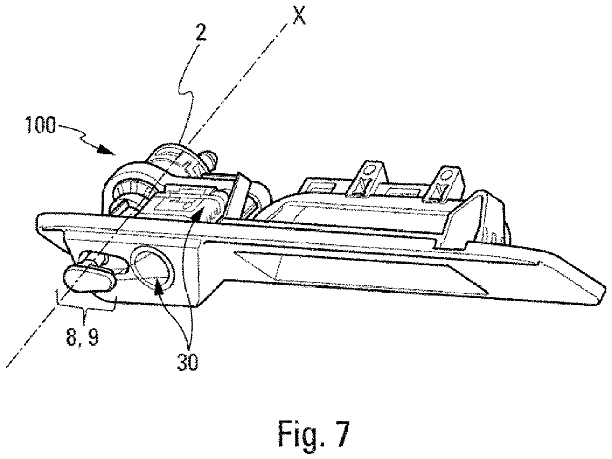

- la figure 7 est une vue schématique en perspective d'un capteur d'un système de détection optique et d'un dispositif de nettoyage associé.

Il est tout d'abord à noter que si les figures exposent l'invention de manière détaillée pour sa mise en œuvre, elles peuvent, bien entendu, servir à mieux définir l'invention le cas échéant. On comprendra également que le mode de réalisation de l'invention illustré par les figures est donné à titre d'exemple non limitatif. Par conséquent, d'autres configurations du dispositif selon l'invention peuvent être réalisées, notamment par variations de l'agencement, de la répartition et du dimensionnement axial et/ou radial des canaux de passage, lesquelles impacteront nécessairement les débits du fluide de nettoyage et pressions associées.

Il est également rappelé que, dans la description qui suit, les dénominations "amont" et "aval" se réfèrent à la direction d'écoulement du fluide de nettoyage dans le dispositif de nettoyage selon l'invention. Ainsi, la dénomination "amont" se réfère au côté du dispositif selon l'invention par lequel ce fluide de nettoyage est admis en son sein, et la dénomination "aval" se réfère au côté du dispositif selon l'invention par lequel le fluide de nettoyage est distribué à l'extérieur de celui-ci, vers une surface d'un capteur optique d'un ensemble de détection optique d'un véhicule automobile.

La figure 1 illustre un dispositif de nettoyage 100 destiné selon l'invention à projeter au moins un fluide vers une surface à nettoyer d'un véhicule automobile, tel qu'un capteur optique 30, le dispositif de nettoyage étant constitué pour l'essentiel, de l'amont vers l'aval suivant un axe longitudinal (X) d'allongement du dispositif de nettoyage, d'un embout d'admission de fluide 11, d'une bride d'entrée 2, d'une tige 10 solidaire de la bride d'entrée 2, d'un piston 3, d'un moyen élastique de rappel en position 4 et d'un élément de distribution 8, 9. Chacun de ces composants est logé à l'intérieur, ou fixé à une extrémité, d'un corps creux 1 de révolution autour d'un axe longitudinal (X).

L'embout d'admission de fluide 11 est formé en saillie de la bride d'entrée 2, et il s'étend à l'opposé du corps creux 1, en étant ici excentré par rapport à l'axe longitudinal (X) du corps creux 1. L'embout d'admission 11 présente un alésage longitudinal traversant et débouchant à l'intérieur du corps creux 1 dans une chambre d'admission 14 (visible notamment sur les figures 4 et 5) délimitée au moins en partie par la bride d'entrée 2, une paroi périphérique du corps creux 1 et par le piston mobile 3.

La bride d'entrée 2 est configurée pour fermer l'extrémité amont du corps creux 1. Un organe d'étanchéité 5 peut être prévu au niveau de cette fermeture. La bride d'entrée est configurée pour supporter la tige 10 sur sa face interne, tournée vers l'intérieur du corps creux.

La tige 10 s'étend en saillie de la bride d'entrée 2, à l'intérieur du corps creux 1. La tige présente une forme cylindrique à section circulaire, dont la face périphérique extérieure est lisse. L'extrémité libre 15 de la tige 10, qui s'étend à l'opposé de la bride d'entrée 2, comporte une gorge périphérique 23 apte à accueillir un joint torique d'étanchéité 6 de manière à permettre le coulissement étanche de la tige 10 dans le piston 3. Tel que cela sera décrit ci-après, le joint torique d'étanchéité 6 est configuré pour prendre appui contre une face interne du piston de sorte que le fluide est bloqué en amont du joint torique d'étanchéité entre la tige et le piston, dès lors que des rainures ménagées dans le piston ne permettent pas l'échappement de fluide vers l'élément de distribution.

Le piston 3 est porteur à une première extrémité, ou extrémité aval, d'un élément de distribution 8, 9 de fluide de nettoyage constitué dans l'exemple illustré de deux parties complémentaires en forme de L.

Le piston 3 comporte, au voisinage de son extrémité amont, c'est-à-dire l'extrémité tournée vers la bride d'entrée 2, une couronne 21 sur la paroi extérieure de laquelle est agencée une gorge périphérique 22, apte à accueillir un élément d'étanchéité 7 de manière à permettre le coulissement étanche du piston 3 dans le corps creux 1. L'élément d'étanchéité 7 est de préférence un joint à lèvres, apte à limiter les frottements du piston 3 dans le corps creux 1.

Il peut être noté que le joint d'étanchéité 6 participant à l'étanchéité du coulissement entre le piston 3 et la tige 10 est distinct de l'élément d'étanchéité 7 participant à l'étanchéité du coulissement entre le piston 3 et le corps creux 1. L'usure éventuelle de l'un implique son seul remplacement, sans nécessiter le remplacement de l'autre.

Le piston est creusé d'une extrémité à l'autre par un conduit interne 13 de circulation du fluide de nettoyage. On décrira plus en détail ci-après la forme interne ici spécifique du piston, notamment en ce qu'il présente une pluralité de rainures 120 configurées pour former des canaux de passage 12 du fluide de nettoyage.

Le piston mobile 3 coulisse dans le corps creux 1 entre une position extrême rétractée, ou position de repos (visible sur la figure 3), et une position extrême déployée, ou position de nettoyage (visible sur la figure 5).

Le fluide de nettoyage est injecté dans le corps creux via l'embout d'admission pour être ensuite éjecté par les orifices de distribution. Des moyens d'acheminement du fluide de nettoyage à travers le corps creux 1, depuis l'embout d'admission 11 de fluide jusqu'à l'élément de distribution 8, 9, comprennent au moins la chambre d'admission 14 et un conduit de distribution 13 (visible sur les figures 3 à 6) ménagé dans le piston mobile 3.

Le moyen élastique de rappel 4, de préférence un ressort hélicoïdal, est agencé dans le corps creux entre la paroi périphérique et le piston, de manière à prendre appui à une extrémité sur le fond du corps et à l'extrémité opposée sur une face de la couronne 21.

Le piston est monté dans le corps creux autour de la tige 10 qui s'étend sensiblement coaxialement au piston mobile 3, de manière à ce qu'au moins l'extrémité libre 15 de la tige 10 s'étende à l'intérieur du conduit interne de distribution 13 du piston mobile 3. Le piston mobile 3 comporte des portions sensiblement cylindriques que l'on peut définir, de l'amont vers l'aval, comme étant une partie d'admission 19 portant la couronne 21, une partie centrale 16 apte à coulisser au sein d'un manchon de guidage creux 18 ménagé à l'extrémité aval du corps creux 1 et une partie terminale de distribution 17, de diamètre moindre, à l'extrémité libre de laquelle l'élément de distribution 8, 9 est apte à être fixé. Le conduit de distribution 13 ménagé dans le piston mobile est constitué d'au moins deux portions de diamètres différents, parmi lesquelles une première partie proximale 131 s'étendant d'une extrémité amont du conduit, c'est-à-dire une extrémité débouchant sur la chambre d'admission 14, et une deuxième partie distale 132 s'étendant depuis l'extrémité aval du conduit. Tel qu'illustré sur les figures 3 à 6, une zone de rétrécissement 130 est agencée entre les parties proximale et distale de diamètres différents.

La première partie proximale 131 élargie du conduit de distribution 13 est définie de manière à permettre le coulissement relatif de la tige 10 par rapport au piston mobile 3 tandis que la deuxième partie inférieure dudit conduit 13 permet, par son diamètre moindre et la zone de rétrécissement qui en découle, de mettre sous pression le fluide de manière à éjecter celui-ci sur le capteur optique 30 en vue de son nettoyage. La partie terminale de distribution 17 du piston 3 est agencée de manière à coopérer avec la portion amont 8 de l'élément de distribution afin que la deuxième partie inférieure du conduit de distribution 13 puisse communiquer avec un canal de distribution 20 ménagé dans l'élément de distribution 8, 9.

Le piston 3 et la tige 10 sont configurés pour prévoir entre eux des canaux de passage 12 qui autorisent l'écoulement de fluide de nettoyage depuis la chambre d'admission 14 (visible notamment sur la figure 4), dont le volume variable est défini en fonction de la position du piston 3 relativement à la bride d'entrée 2. Les canaux de passage 12 sont obtenus par des rainures 120 réalisées dans la paroi intérieure 31 du piston 3, ces rainures étant recouvertes par la face périphérique extérieure lisse de la tige 10, totalement ou partiellement selon la position relative de la tige par rapport au piston. Dans le mode de réalisation illustré par la figure 1, les rainures 120 sont ménagées dans la paroi intérieure 31 du piston 3 délimitant le conduit interne de distribution 13 le long de la partie d'admission 19, et elles présentent des dimensions axiale et radiale semblable l'une par rapport à l'autre, mais il sera compris que d'autres agencements pourraient être prévus sans sortir du contexte de l'invention, dès lors que les rainures sont ménagées dans le piston 3, au niveau de la paroi intérieure 31, les avantages d'une telle disposition sur le piston étant détaillés par la suite.

La partie d'admission 19 comporte ainsi des rainures 120 tandis que la partie centrale 16 du piston est lisse. Le coulissement relatif du piston par rapport à la tige est ainsi un coulissement étanche, empêchant le passage de fluide, lorsque le joint torique d'étanchéité 6 ménagé en partie d'extrémité libre 15 de la tige 10 se trouve dans la partie centrale 16 du piston et porte donc de façon continue sur la paroi intérieure 31 du piston 3, tandis qu'il consiste en un coulissement perméable, permettant le passage de fluide, lorsque le joint torique d'étanchéité 6 se trouve dans la partie d'admission 19, le fluide pouvant s'échapper par les rainures dont l'extrémité est dégagée.

La figure 2 illustre un mode de réalisation de l'invention et présente un exemple non limitatif d'agencement des rainures 120 formant les canaux de passage 12 ménagées sur la paroi intérieure du piston 3. Une portée 121 suffisante est maintenue entre deux rainures consécutives. Par portée suffisante, on entend que quelle que soit la dimension des rainures et leur nombre, la tige et le piston présentent une surface de contact suffisamment importante par rapport aux trous laissés par les rainures, afin de permettre un guidage stable du piston autour de la tige. Dans cet exemple, huit canaux sont formés par l'association d'une des huit rainures ménagées dans la paroi intérieure du piston 3 et de la tige 10 portant contre cette paroi intérieure.

Ces rainures 120 s'étendent axialement, entre une extrémité proximale 122, débouchant sur une face d'extrémité 210 de la couronne 21 qui participe à délimiter la chambre d'admission 14, et une extrémité distale 123, dans l'épaisseur du piston mobile3 et s'étendant à une dimension axiale déterminée de cette face d'extrémité proximale 210 de la couronne 21.

Ces rainures 120 participant à former les canaux de passage peuvent présenter des dimensions axiales, radiales, ou bien des profondeurs, qui sont variables.

On va maintenant décrire plus en détails un exemple de déploiement de l'élément de distribution dans le dispositif de nettoyage selon l'invention, en se référant notamment aux figures 3 à 5, qui illustrent des étapes successives du déploiement.

La figure 3 illustre le dispositif de nettoyage de l'invention dans une première position de repos, selon lequel l'élément de distribution 8, 9 est en position rétractée et logé dans la partie inférieure du corps du dispositif de nettoyage 100. Le piston est alors agencé de manière à ce que la partie d'admission 19 soit plaquée contre la bride d'entrée, la chambre d'admission 14 étant alors réduite à un volume minimal. Dans cette position de repos, le moyen élastique de rappel est à l'état non compressé définissant la longueur libre du ressort 4.

Il est notable que dans cette position de repos, l'extrémité libre 15 de la tige 10 s'étend profondément dans le conduit interne de distribution 13 ménagé dans le piston mobile, de telle sorte que cette extrémité libre 15 de la tige se trouve sensiblement au voisinage de la zone de rétrécissement 130. Dans cette position de repos, les rainures 120 agencées dans le piston 3 sont entièrement recouvertes par la tige 10 de sorte qu'au niveau de l'extrémité distale 123 de chacune de ces rainures, les canaux de passage sont fermés. La présence du joint torique d'étanchéité 6, agencé dans la gorge périphérique 23 de la tige et dimensionné pour frotter contre la paroi interne 31 du piston 3, permet d'assurer l'étanchéité et d'éviter le passage de fluide vers l'élément de distribution.

Dans cette position de repos, du fluide est injecté dans le dispositif de nettoyage lorsqu'une action de nettoyage d'un capteur optique est commandée. Le fluide se répartit entre la bride d'entrée et le piston mobile, dans la chambre d'admission 14, et s'insère en outre dans les canaux de passage, chaque rainure 120 formant un canal de passage ayant une extrémité proximale libre 122 qui débouche sur la face d'extrémité 210 de la couronne 21, et qui est donc accessible depuis la chambre d'admission. Tel que cela vient d'être décrit, les rainures ménagées dans le piston sont entièrement recouvertes par la tige dans cette position de repos et le fluide s'insérant dans les canaux y reste bloqué.

La figure 4 illustre le dispositif de nettoyage selon l'invention dans une position intermédiaire entre la position de repos et la position extrême déployée. Cette position intermédiaire est obtenue suite au coulissement du piston le long de la tige, sous l'effet de la pression du fluide de nettoyage, notamment contre la couronne 21 du piston 3, du fluide de nettoyage continuant à être injecté par l'embout d'admission. Dans cette position intermédiaire, le piston a coulissé le long de la tige de sorte que l'extrémité libre 15 de la tige 10 s'est éloignée de la zone de rétrécissement 130 : le joint d'étanchéité 6 ne se trouve plus au niveau de la partie centrale 16 du piston mais au niveau de la partie d'admission 19 du piston dans laquelle s'étendent les rainures 120. La tige et le joint d'étanchéité torique 6 ne recouvrent plus l'extrémité distale 123 des rainures 120, le joint d'étanchéité torique étant disposé entre cette extrémité distale dégagée et la face d'extrémité 210 de la couronne 21. Le fluide de nettoyage présent dans chacune des rainures peut alors s'infiltrer dans le conduit de distribution 13, tel qu'illustré par la flèche F1 visible sur la figure 4a, et du fluide peut circuler depuis la chambre d'admission 14 vers l'élément de distribution 8,9 par l'intermédiaire des canaux de passage.

La figure 5 illustre la position extrême déployée, c'est-à-dire la position de déploiement maximal du dispositif de nettoyage. La contre-pression exercée par le ressort 4 et/ou la butée de la couronne 21 du piston contre le manchon de guidage creux 18 permet de limiter le déplacement de la tige par rapport au piston et éviter que la tige ne s'échappe hors du conduit de distribution 13 ménagé dans le piston 3. Dans cette position de butée, l'extrémité distale de chacune des rainures est dégagée et le joint d'étanchéité 6 n'a pour effet que de bloquer le passage de fluide entre les deux parois interne et externe du piston et de la tige, sans gêner le passage dans les rainures. L'élément de distribution 8, 9 est alors complètement déployé hors du dispositif de nettoyage de manière à adopter une position optimale de nettoyage du capteur optique 30, le débit d'éjection du fluide étant maximal.

A l'issue de cette phase de nettoyage par éjection de la totalité du fluide, le piston, après s'être déplacé à l'opposé de la chambre d'admission, effectue un trajet inverse de rappel sous l'effet combiné du rappel du ressort et de l'arrêt d'alimentation en fluide via l'embout d'admission, le ressort repoussant alors le piston dans sa position d'origine en repoussant le fluide restant hors de la chambre d'admission et hors du corps creux.

La figure 6 illustre schématiquement l'architecture hydraulique globale associée au dispositif de nettoyage 100 pouvant comprendre, outre l'embout d'admission 11, le corps creux 1, la tige 10 et le piston mobile 3 porteur des canaux de passage à dimensions axiales différentes, un réservoir de stockage 24 du fluide de nettoyage et des éléments de pilotage de la circulation de fluide de nettoyage entre le réservoir 24 et l'embout d'admission 11 dudit dispositif de nettoyage 100, lequel est, ici, schématiquement représenté par un vérin. Lesdits éléments de pilotage peuvent être constitués d'une pompe 25 et optionnellement d'une vanne solénoïde 26.

On comprend qu'à l'issue de la phase de nettoyage par éjection de la totalité du fluide, le fluide, sous l'effet du retour du piston poussé par le ressort en position de repos, traverse l'embout d'admission puis retourne vers la pompe et vers le réservoir de stockage.

La description qui précède explique clairement comment l'invention permet d'atteindre les objectifs qu'elle s'est fixés et notamment de proposer un dispositif de nettoyage d'un capteur optique d'un véhicule automobile qui, par un agencement particuliers des rainures formant les canaux de passage de fluide de nettoyage, c'est-à-dire un agencement de ces rainures dans le piston mobile et non pas sur la tige fixe, permet de simplifier la fabrication des pièces constitutives du dispositif de nettoyage destiné à projeter au moins un fluide vers une surface à nettoyer d'un véhicule automobile, ce qui facilite la production des pièces à reprendre lorsque le dispositif doit avoir un dimensionnement spécifique par rapport au standard dessiné à l'origine, et permet de limiter les opérations d'après-vente en cas d'usure d'un élément d'étanchéité.

Avantageusement selon l'invention, les rainures 120, qui participent à former les canaux de passage de fluide de nettoyage entre le piston et la tige, sont ménagées dans la paroi intérieure 31 du piston mobile 3 plutôt que sur la face extérieure de la tige 10. Ainsi, pour un nombre défini de rainures, la réalisation de celles-ci sur le piston mobile, qui présente des dimensions, ici un diamètre, plus importantes que celles de la tige, permet de ménager des portées plus importantes entre deux rainures et faciliter le coulissement relatif de la tige par rapport au piston. Dans un contexte de dispositif miniature, qui doit être disposé à proximité immédiate d'un système de détection optique du type caméra de recul logé dans le pare-chocs d'un véhicule automobile, ce qui peut imposer un ordre de grandeur de 4 à 7 mm pour les diamètres de tige et de piston mobile, la fabrication est simplifiée lorsque les rainures sont à réaliser sur l'élément de plus grand diamètre.

Un autre avantage à la mise en œuvre des rainures sur le piston mobile est que les rainures débouchent dans la chambre d'admission ménagée entre la bride d'entrée et la couronne disposée à l'extrémité du piston logée dans le corps creux. Dès l'arrivée de fluide dans la chambre d'admission, celui-ci commence à se répartir dans les canaux de passage. Il en résulte que lorsque la position relative du piston par rapport à la tige permet le passage de fluide dans le conduit de distribution interne via les canaux de passage, ces canaux sont déjà remplis. Il n'y a ainsi pas ou peu d'à coup dans la distribution de fluide. Le passage du fluide de la chambre d'admission aux canaux de passage se faisant avec une réduction de section importante, on comprend qu'il est intéressant selon l'invention que le temps passé pour que le fluide remplisse ces canaux soit masqué par le temps de déploiement du piston mobile vers la position relative à la tige dans laquelle le fluide peut accéder au conduit de distribution interne.

Par ailleurs, le fait d'avoir les rainures sur le piston mobile permet de limiter le nombre de pièces à modifier par rapport à la version standard du dispositif lorsque l'on souhaite développer un dispositif aux caractéristiques fonctionnelles différentes, (par exemple le débit du fluide projeté, la course du dispositif avant la projection, etc...) qui impliquent un dimensionnement et/ou un agencement différent des rainures. La tige peut rester dans un format standard, et il n'est dès lors pas nécessaire de modifier la bride d'entrée, en saillie de laquelle s'étend la tige.

Sur la figure 7 est illustré le dispositif de nettoyage 100 d'un capteur optique 30. Le dispositif d'admission et de distribution de fluide est mobile en translation selon l'axe X entre une position déployée où l'élément de distribution 8, 9 est disposé en regard du capteur optique 30, et une position escamotée où l'élément de distribution 8, 9 est rétracté à l'intérieur d'un boîtier de structure de carrosserie du véhicule pour d'une part le protéger et d'autre part ne pas gêner la détection optique du capteur.

La présente invention n'est pas limitée au mode de réalisation précédemment décrit, dès lors que les rainures participant à former les canaux de passage entre la tige et le piston mobile sont agencées dans le piston. A titre d'exemple non limitatif de mode de réalisation envisageable, on pourra prévoir que les rainures 120 ménagées dans le piston mobile et participant à former les canaux de passage 12 présentent des dimensions différentes les unes des autres, et notamment des dimensions longitudinales différentes, de manière à pouvoir piloter l'arrivée progressive de fluide de nettoyage dans l'élément de distribution 8,9.

## Revendications

1. Dispositif de nettoyage (100), destiné à projeter au moins un fluide vers une surface à nettoyer d'un véhicule automobile, tel qu'un capteur optique d'un système de détection optique, le dispositif de nettoyage comprenant au moins :
- un corps creux (1) fermé à une extrémité par une bride d'entrée (2),
- un piston mobile (3) en coulissement le long d'un axe longitudinal (X) dans le corps creux (1) et porteur à une première extrémité d'un élément de distribution (8, 9) de fluide de nettoyage, le piston étant mobile entre une position extrême rétractée et une position extrême déployée,
- une tige (10) solidaire de la bride d'entrée (2) qui s'étend parallèlement à l'axe longitudinal (X) et le long de laquelle coulisse le piston mobile (3),
- des moyens d'acheminement de fluide de nettoyage à travers le corps creux, depuis un embout d'admission (11) de fluide jusqu'à l'élément de distribution (8, 9), comprenant au moins une chambre d'admission (14) dont le volume varie en fonction du déplacement du piston mobile (3) et un conduit de distribution (13) ménagé dans le piston mobile (3),
- le piston (3) et la tige (10) étant configurés pour prévoir entre eux au moins un canal de passage (12) de fluide de nettoyage,
**caractérisé en ce que** le au moins un canal de passage (12) est formé par une rainure (120) ménagée dans le piston mobile (3).

2. Dispositif de nettoyage selon la revendication 1, **caractérisé en ce que** la rainure (120) du au moins un canal de passage (12) est agencée dans le piston mobile (3) parallèlement à l'axe longitudinal (X).

3. Dispositif de nettoyage selon l'une des revendications 1 ou 2, **caractérisé en ce que** le piston mobile (3) et la tige (10) sont configurés de sorte que chaque rainure (120) ménagée dans le piston mobile (3) est recouverte, intégralement dans la position extrême rétractée et partiellement dans les autres positions relatives du piston et de la tige, par la tige (10).

4. Dispositif de nettoyage selon l'une des revendications précédentes, **caractérisé en ce que** la rainure (120) du au moins un canal (12) est ménagée sur la paroi interne du piston (3) délimitant le conduit de distribution (13).

5. Dispositif de nettoyage selon l'une des revendications précédentes, **caractérisé en ce que** la rainure (120) du au moins un canal de passage (12) est ménagée dans le piston (3) de manière à déboucher sur la chambre d'admission (14).

6. Dispositif de nettoyage selon l'une quelconque des revendications précédentes, **caractérisé en ce que** des moyens de déplacement du piston (3) comprennent, outre les moyens d'acheminement du fluide, des moyens élastiques (4) logés dans le corps creux (1) pour tendre à rappeler en position extrême de repos le piston mobile (3).

7. Dispositif de nettoyage selon l'une quelconque des revendications précédentes, **caractérisé en ce que** le piston mobile (3) comporte une partie centrale (16) sensiblement cylindrique, apte à coulisser au sein d'un manchon de guidage creux (18) ménagé à l'extrémité du corps creux (1) opposé à la bride d'entrée (2), une partie terminale de distribution (17) prolongeant la partie centrale (16) et à l'extrémité libre de laquelle l'élément de distribution (8, 9) est apte à être fixé, et une partie d'admission (19) prolongeant la partie centrale (16) à l'opposé de la partie terminale de distribution (17) et configurée pour coulisser à l'intérieur du corps creux (1).

8. Dispositif de nettoyage selon la revendication précédente, **caractérisé en ce que** la rainure (120) du au moins un canal de passage (12) est réalisée dans le piston (3) le long de la partie d'admission (19).

9. Dispositif de nettoyage selon l'une quelconque des revendications 7 ou 8, **caractérisé en ce qu'**une gorge périphérique (23) est agencée à une extrémité libre (15) de la tige (10), pour accueillir un joint d'étanchéité (6), de telle manière que la tige (10), équipée dudit joint (6), puisse coulisser de manière étanche dans la partie centrale (19) du piston (3).

10. Dispositif de nettoyage selon l'une des revendications précédentes, **caractérisé en ce qu'**une pluralité de canaux de passage (12) est disposée entre la tige (10) et le piston mobile (3), au moins une des rainures (120) ménagées dans le piston mobile présentant une dimension axiale distincte de celle des rainures voisines.

11. Dispositif de nettoyage selon l'une quelconque des revendications précédentes, **caractérisé en ce qu'**une pluralité de canaux de passage (12) est disposé entre la tige (10) et le piston mobile (3), au moins deux rainures (120) ménagées dans le piston mobile présentant des dimensions radiales variables.

12. Véhicule automobile équipé d'un système de détection optique et d'un capteur optique associé, **caractérisé en ce qu'**il comporte au moins un dispositif de nettoyage selon l'une quelconque des revendications précédentes, destiné à projeter au moins un fluide vers une surface du capteur optique à nettoyer.

## Patentansprüche

1. Reinigungsvorrichtung (100), die dazu bestimmt ist, mindestens ein Fluid auf eine zu reinigende Oberfläche eines Kraftfahrzeugs, wie etwa eines optischen Sensors eines optischen Detektionssystems, zu spritzen, wobei die Reinigungsvorrichtung mindestens Folgendes beinhaltet:
- einen Hohlkörper (1), der an einem Ende durch einen Eintrittsflansch (2) verschlossen ist,
- einen bewegbaren Kolben (3), der entlang einer Längsachse (X) in dem Hohlkörper (1) gleitet und an einem ersten Ende ein Element zum Verteilen (8, 9) von Reinigungsfluid trägt, wobei der Kolben zwischen einer eingefahrenen Endstellung und einer ausgefahrenen Endstellung bewegbar ist,
- einen Schaft (10), der fest an dem Eintrittsflansch (2) befestigt ist und sich parallel zu der Längsachse (X) erstreckt und entlang dessen der bewegbare Kolben (3) gleitet,
- Mittel zum Zuführen von Reinigungsfluid durch den Hohlkörper, von einem Fluideinlassstutzen (11) bis zu dem Verteilerelement (8, 9), beinhaltend mindestens eine Einlasskammer (14), deren Volumen in Abhängigkeit von der Verschiebung des bewegbaren Kolbens (3) variiert, und eine Verteilerleitung (13), die in dem bewegbaren Kolben (3) eingerichtet ist,
- wobei der Kolben (3) und der Schaft (10) dazu konfiguriert sind, mindestens einen Durchgangskanal (12) für Reinigungsfluid zwischen sich vorzusehen,
**dadurch gekennzeichnet, dass** der mindestens eine Durchgangskanal (12) durch eine Nut (120) gebildet ist, die in dem bewegbaren Kolben (3) eingerichtet ist.

2. Reinigungsvorrichtung nach Anspruch 1, **dadurch gekennzeichnet, dass** die Nut (120) des mindestens einen Durchgangskanals (12) parallel zur Längsachse (X) in dem bewegbaren Kolben (3) angeordnet ist.

3. Reinigungsvorrichtung nach einem der Ansprüche 1 oder 2, **dadurch gekennzeichnet, dass** der bewegbare Kolben (3) und der Schaft (10) so konfiguriert sind, dass jede in dem bewegbaren Kolben (3) eingerichtete Nut (120) in der eingefahrenen Endstellung gänzlich und in den anderen relativen Positionen des Kolbens und des Schafts teilweise durch den Schaft (10) abgedeckt wird.

4. Reinigungsvorrichtung nach einem der vorhergehenden Ansprüche, **dadurch gekennzeichnet, dass** die Nut (120) des mindestens einen Kanals (12) an der Innenwand des Kolbens (3), die die Verteilerleitung (13) abgrenzt, eingerichtet ist.

5. Reinigungsvorrichtung nach einem der vorhergehenden Ansprüche, **dadurch gekennzeichnet, dass** die Nut (120) des mindestens einen Durchgangskanals (12) so in dem Kolben (3) eingerichtet ist, dass sie in die Einlasskammer (14) mündet.

6. Reinigungsvorrichtung nach einem der vorhergehenden Ansprüche, **dadurch gekennzeichnet, dass** die Mittel zum Verschieben des Kolbens (3) außer den Fluidzuführmitteln elastische Mittel (4) beinhalten, die in dem Hohlkörper (1) untergebracht sind, um den bewegbaren Kolben (3) tendenziell wieder in die Ruheendstellung zurückzubringen.

7. Reinigungsvorrichtung nach einem der vorhergehenden Ansprüche, **dadurch gekennzeichnet, dass** der bewegbare Kolben (3) Folgendes umfasst: einen im Wesentlichen zylindrischen mittleren Abschnitt (16), der fähig ist, innerhalb einer hohlen Führungshülse (18) zu gleiten, die an dem Ende des Hohlkörpers (1), das dem Eintrittsflansch (2) entgegengesetzt ist, eingerichtet ist, einen Verteilerendabschnitt (17), der den mittleren Abschnitt (16) verlängert und an dessen freiem Ende das Verteilerelement (8, 9) befestigt werden kann, und einen Einlassabschnitt (19), der den mittleren Abschnitt (16) auf der gegenüberliegenden Seite des Verteilerendabschnitts (17) verlängert und dazu konfiguriert ist, im Inneren des Hohlkörpers (1) zu gleiten.

8. Reinigungsvorrichtung nach dem vorhergehenden Anspruch, **dadurch gekennzeichnet, dass** die Nut (120) des mindestens einen Durchgangskanals (12) entlang des Einlassabschnitts (19) in dem Kolben (3) hergestellt ist.

9. Reinigungsvorrichtung nach einem der Ansprüche 7 oder 8, **dadurch gekennzeichnet, dass** an einem freien Ende (15) des Schafts (10) eine umlaufende Auskehlung (23) angeordnet ist, um eine Dichtung (6) aufzunehmen, sodass der Schaft (10), der mit der Dichtung (6) versehen ist, dicht in dem mittleren Abschnitt (19) des Kolbens (3) gleiten kann.

10. Reinigungsvorrichtung nach einem der vorhergehenden Ansprüche, **dadurch gekennzeichnet, dass** zwischen dem Schaft (10) und dem bewegbaren Kolben (3) eine Vielzahl von Durchgangskanälen (12) arrangiert ist, wobei mindestens eine der Nuten (120), die in dem bewegbaren Kolben eingerichtet sind, eine axiale Abmessung aufweist, die sich von der der angrenzenden Nuten unterscheidet.

11. Reinigungsvorrichtung nach einem der vorhergehenden Ansprüche, **dadurch gekennzeichnet, dass** zwischen dem Schaft (10) und dem bewegbaren Kolben (3) eine Vielzahl von Durchgangskanälen (12) arrangiert ist, wobei mindestens zwei Nuten (120), die in dem bewegbaren Kolben eingerichtet sind, variable radiale Abmessungen aufweisen.

12. Kraftfahrzeug, das mit einem optischen Detektionssystem und einem assoziierten optischen Sensor ausgerüstet ist, **dadurch gekennzeichnet, dass** es mindestens eine Reinigungsvorrichtung nach einem der vorhergehenden Ansprüche umfasst, die dazu bestimmt ist, mindestens ein Fluid auf eine Oberfläche des zu reinigenden optischen Sensors zu spritzen.

## Claims

1. Cleaning device (100), intended to spray at least one fluid towards a surface to be cleaned of a motor vehicle, such as an optical sensor of an optical detection system, the cleaning device comprising at least:
- a hollow body (1) closed at one end by an inlet flange (2),
- a movable piston (3) that slides along a longitudinal axis (X) in the hollow body (1) and that bears, at a first end, a cleaning fluid dispensing element (8, 9), the piston being movable between an extreme retracted position and an extreme deployed position,
- a rod (10) secured to the inlet flange (2) which extends parallel to the longitudinal axis (X) and along which the movable piston (3) slides,
- means for conveying cleaning fluid through the hollow body, from a fluid intake end-fitting (11) to the dispensing element (8, 9), comprising at least one intake chamber (14) whose volume varies as a function of the displacement of the movable piston (3) and a dispensing duct (13) formed in the movable piston (3),
- the piston (3) and the rod (10) being configured to provide between them at least one cleaning fluid flow path (12),
**characterized in that** the at least one flow path (12) is formed by a groove (120) formed in the movable piston (3).

2. Cleaning device according to Claim 1, **characterized in that** the groove (120) of the at least one flow path (12) is arranged in the movable piston (3) parallel to the longitudinal axis (X).

3. Cleaning device according to one of Claims 1 and 2, **characterized in that** the movable piston (3) and the rod (10) are configured so that each groove (120) formed in the movable piston (3) is covered, fully in the extreme retracted position and partially in the other relative positions of the piston and of the rod, by the rod (10).

4. Cleaning device according to one of the preceding claims, **characterized in that** the groove (120) of the at least one flow path (12) is formed on the internal wall of the piston (3) delimiting the dispensing duct (13).

5. Cleaning device according to one of the preceding claims, **characterized in that** the groove (120) of the at least one flow path (12) is formed in the piston (3) so as to emerge on the intake chamber (14) .

6. Cleaning device according to any one of the preceding claims, **characterized in that** means for displacing the piston (3) comprise, in addition to the fluid conveying means, elastic means (4) housed in the hollow body (1) to tend to recall the movable piston (3) to the extreme position of rest.

7. Cleaning device according to any one of the preceding claims, **characterized in that** the movable piston (3) comprises a substantially cylindrical central part (16), capable of sliding in a hollow guiding sleeve (18) formed at the end of the hollow body (1) opposite the inlet flange (2), a terminal dispensing part (17) extending the central part (16) and at the free end of which the dispensing element (8, 9) can be fixed and an intake part (19) extending the central part (16) opposite the terminal dispensing part (17) and configured to slide inside the hollow body (1) .

8. Cleaning device according to the preceding claim, **characterized in that** the groove (120) of the at least one flow path (12) is produced in the piston (3) along the intake part (19).

9. Cleaning device according to either one of Claims 7 and 8, **characterized in that** a peripheral groove (23) is arranged at a free end (15) of the rod (10), to accommodate a seal (6), so that the rod (10), equipped with said seal (6), can slide tightly in the central part (19) of the piston (3).

10. Cleaning device according to one of the preceding claims, **characterized in that** a plurality of flow paths (12) is disposed between the rod (10) and the movable piston (3), at least one of the grooves (120) formed in the movable piston having an axial dimension distinct from that of the neighbouring grooves.

11. Cleaning device according to any one of the preceding claims, **characterized in that** a plurality of flow paths (12) is disposed between the rod (10) and the movable piston (3), at least two grooves (120) formed in the movable piston having variable radial dimensions.

12. Motor vehicle equipped with an optical detection system and an associated optical sensor, **characterized in that** it comprises at least one cleaning device according to any one of the preceding claims, intended to spray at least one fluid towards a surface of the optical sensor to be cleaned.
